# EUROPÄISCHE PATENTSCHRIFT

(11) **EP 2 078 665 B1**
(45) Veröffentlichungstag und Bekanntmachung des Hinweises auf die Patenterteilung: **02.11.2011**
(21) Anmeldenummer: 08020794.7
(22) Anmeldetag: 29.11.2008
(51) Int. Cl.: B62D 33/04, B62D 23/00

(54) **Gerippekonstruktion eines Omnibusses**
Frame construction for an omnibus
Structure squelettique d'un omnibus

(30) Priorität: 09.01.2008 DE 102008003719
(43) Veröffentlichungstag der Anmeldung: 15.07.2009
(73) Patentinhaber: MAN Truck & Bus AG, 80995 München (DE)
(72) Erfinder: Übelacker, Andreas, 82281 Egenhofen (DE)

(56) Entgegenhaltungen:
- WO-A-95/04616
- DE-A1- 19 711 738
- DE-U1- 29 818 803
- US-A- 6 010 182
- US-A1- 2002 050 064
- US-A1- 2005 050 730

## Beschreibung

Die Erfindung bezieht sich auf eine Gerippekonstruktion für einen Aufbau eines Nutzfahrzeugs entsprechend dem Oberbegriff des Anspruchs 1.

Aus dem Handbuch der Kraftfahrzeugtechnik; Buschmann/Koessler; Band 2; Heyne Verlag; S. 632 ff, sind Gerippekonstruktionen bekannt, bei denen Motor- und Getriebegehäuseteile gleichzeitig als Traggerüst dienen. Auch Anflanschen von solchen Teilen an eigentliche Rahmen ist möglich, so dass die Gehäuse nur einen Teil des Traggerüstes bilden.

Für Querteile und Querversteifungen können dabei offene oder geschlossene Querschnitte (U-Profile, Kastenprofile, Rohre) verwendet werden. Auch hierfür ist die Verwindungssteifigkeit von Bedeutung. Steife Querteile erteilen dem Rahmen auch bei verwindungsweichen Stielquerschnitten große Verwindungssteifigkeit.

Zur Verbindung zwischen den Rahmenteilen und den Querteilen dient Nietung und Schweißung, selten Verschraubung (teuer). Schweißung ist gegenüber der Vernietung zum Beispiel offener Querschnitte vorteilhaft, da die Verschweißung eine höhere Versteifung der verbundenen Teile ermöglicht. Träger mit geschlossenem Querschnitt werden überwiegend verschweißt, die Spannungsspitzen an Unstetigkeitsstellen des Kraftverlaufes sind dabei größer als bei Nietung.

Onmibusaufbauten werden zumeist in Gerippebauweise, selbsttragend oder mittragend hergestellt. Die Kasten- oder Röhrenform ist festigkeitsmäßig günstig und auch weitgehend der Berechnung zugänglich. Die Seitenwände nehmen die Biegungsbeanspruchung auf. Fenster und besonders Türen bilden jedoch Unterbrechungen, die durch rahmenartige Versteifungen überbrückt werden müssen. Vielfach ist es daher zweckmäßig, die Seitenwand nur bis zur Fensterbrüstung tragend auszubilden. Verwindung wird jedoch gut aufgenommen, wenn das Dach mittragend ausgeführt wird. Andernfalls sind besondere Torsionsglieder anzuordnen. Der Gesamtverband soll durch Biegung und Torsion gleichmäßig belastet werden.

Die DE 41 42 258 C2 offenbart einen Tür- und Fensterrahmen sowie Gitterstrukturen in Nutzfahrzeugen, insbesondere Omnibussen, mit einem aus Vertikal- und Horizontalträgern bestehenden Gerippe aus Hohlprofilen. Die Vertikalträger weisen in den Stößen zu den Horizontalträgern Ausrundungen auf. Die Vertikalträger sind Halbzeugrohre, deren Enden Aufweitungen mit Ausrundungen aufweisen. An den Stossstellen zu den Horizontalträgern sind die Vertikalträger ohne weitere Bearbeitung rundum verschweißbar. Weitere Beispiele sind von US 6010182 sowie US20020050064 bekannt.

Es erweist sich jedoch als nachteilig, dass die Metallprofilelemente von Omnibusgerippekonstruktionen viele Horizontal- und Vertikalverstrebungen aufweisen, die miteinander verschweißt werden. Eine Vielzahl von Schweißnähten liegt dabei auf engstem Raum zueinander benachbart.

Es ist daher die Aufgabe der Erfindung, eine gattungsgemäße Gerippekonstruktion zu schaffen, bei der bei der Durchführungen von Schweißarbeiten bereits vorhandene Schweißnähte nicht beeinflusst werden.

Die Aufgabe wird erfindungsgemäß durch die Merkmale des Anspruchs 1 gelöst.

Die Erfindung wird beispielhaft an einem Omnibus dargestellt, sie ist grundsätzlich aber auch in anderen Nutzfahrzeugen bzw. allgemeinen Kraftfahrzeugen einsetzbar.

Busgerippe bestehen durchwegs aus Stahl- oder Aluminium-Vierkantrohren. Zur Gestaltung der Gerippekonstruktion werden dabei horizontale und/oder vertikale Metallprofilelemente miteinander verschweißt. Grundsätzlich ist auch denkbar, die Metallprofilelemente durch andere Verfahren (z. B. Kleben) mit dem Knoten zu verbinden. Im Stand der Technik werden die Metallprofilelemente an Knotenpunkten durch an sich bekannte Schweißverfahren miteinander verbunden. Die Gestaltung der Schweißnähte ist mit hohem fertigungstechnischen Aufwand verbunden. Die Häufung diverser Schweißnähte auf engstem Raum ist jedoch kritisch. Zeitlich später angebrachte Schweißnähte können frühere Schweißungen in Haltbarkeit und Belastbarkeit beeinträchtigen. Das Material der Metallprofilelemente wird im Schweißbereich zeitlich hintereinander wiederholt stark erhitzt und bereits vorhandene Schweißarbeiten werden stark beansprucht.

Die Erfindung sieht vor, die Knoten aus dünnwandigen schweißbaren Niederdruckstahlgussteilen herzustellen. Hierdurch lässt sich eine für die Festigkeit optimale Gestaltung erzielen. Die Schweißverbindungen zwischen den Armenden der Knoten und den Metallprofilelementen sind erfindungsgemäß voneinander beabstandet angeordnet. Die Knoten können als montierte Stahlgussteile hergestellt werden, denkbar ist auch, die Knoten einstückig aus Aluminium oder als Hohl- oder als Vollkörper zu gestalten. Die Schweißverbindungen werden erfindungsgemäß räumlich auseinander gezogen, so dass zeitlich zurückliegende Schweißarbeiten von nachfolgenden Schweißungen nicht beeinflusst werden.

Nach einer anderen Ausführungsform der Erfindung sind die Armenden eines Knotens in einer gemeinsamen Ebene angeordnet.

Nach einer anderen Ausführungsform der Erfindung sind die Armenden eines Knotens in mehreren sich kreuzenden Ebenen angeordnet. Horizontale und vertikale Metallprofilelemente können auf diese Weise miteinander verbunden werden. Denkbar ist auch, die Armenden im spitzen Winkel am Knoten anzuordnen. Eine Vormontage einzelner Baugruppen wird erleichtert. Seitenwände und horizontale Boden- und Dachelemente können erfindungsgemäß miteinander verbunden werden.

Nach einer anderen Ausführungsform der Erfindung weisen die Armenden einen gemeinsamen zentralen Kreuzungspunkt auf. Erfindungsgemäß werden mehrfache Verschweißungen auf engstem Raum problemlos möglich.

Nach einer anderen Ausführungsform der Erfindung entspricht das Profil eines Armendes dem Profil des mit ihm zu verbindenden Metallprofilelements. Die Erfindung ermöglicht somit genormte Armenden, die zu den verschiedensten Metallprofilelementen passen.

Nach einer anderen Ausführungsform der Erfindung ist zwischen dem Armende und dem anzuschweißenden Metallprofilelement eine Steckverbindung angeordnet. Die Steckverbindung ermöglicht zusätzlich die Anpassung von Metallprofilelementen anderer Durchmesser am Knoten.

Nach einer anderen Ausführungsform der Erfindung ist das Ende des an dem Armende anzuschweißenden Metallprofilelements in das Armende eingeschoben.

Andererseits kann das Ende des an dem Armende anzuschweißenden Metallprofilelements über das Ende des Armendes geschoben sein.

Nach einer anderen Ausführungsform der Erfindung besteht die Steckverbindung aus einem sowohl in das Armende, als auch in das Metallprofilelement eingreifenden Steckzapfen. Denkbar ist auch, dass zwischen zwei benachbarten Armenden ein kreisbogenförmiger Übergang angeordnet ist.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:
- Fig. 1: in perspektivischer Darstellung den erfindungsgemäßen Knoten,
- Fig. 2: den Knoten entsprechend der Schnittstelle A-A nach Fig. 1 axial geschnitten und
- Fig. 3: die Verbindung nach dem Stand der Technik.

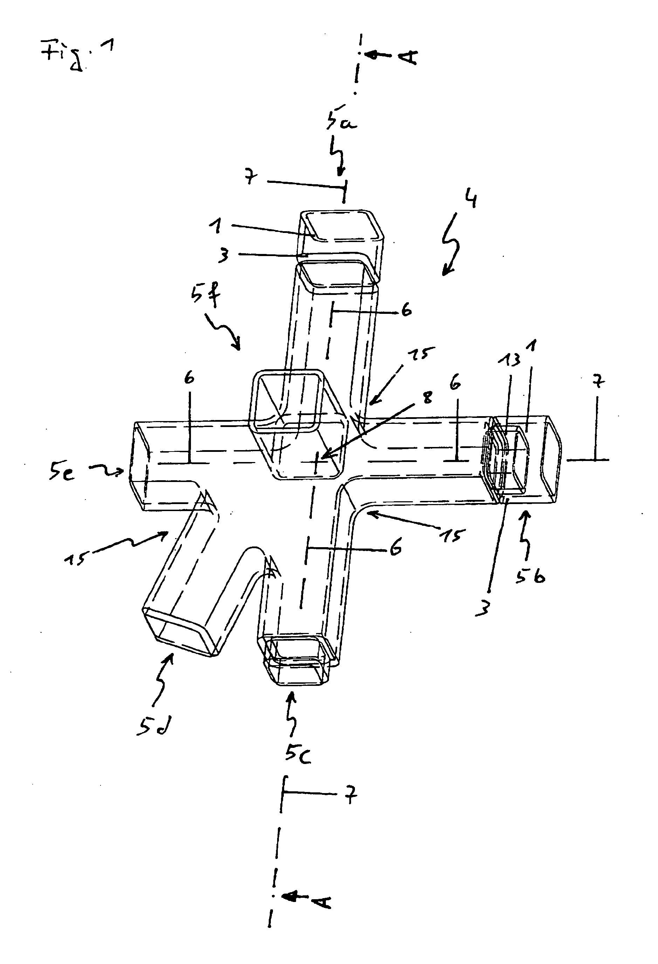

Fig. 1 zeigt einen Knoten 4 in perspektivischer Darstellung, an dessen einem Armende 5b ein verkürzt dargestelltes Metallprofilelement 1 angeordnet ist. Der Knoten 4 weist in Fig. 1 sechs Armenden 5 (5a, 5b, 5c, 5d, 5e, 5f) auf, die dem Anschluss der Metallprofilelemente 1 dienen. Die Anzahl von 6 Armenden ist lediglich beispielhaft gewählt. Je nach Einsatzzweck können in einem Knoten 4 mehr oder weniger Armenden angeordnet sein. Die Armenden 5 des Knotens 4 verbinden die Verbindungsstellen 3 der Metallprofilelemente 1 zumindest mittelbar miteinander. Die Längsachsen 6 der Armenden 5 sind auf die korrespondierenden Längsachsen 7 der mit ihnen zu verbindenden Metallprofilelemente 1 gerichtet. An den Verbindungsstellen 3 ist je ein Metallprofilelement 1 mit dem Knoten 4 verschweißt. Obwohl im verbauten Zustand je ein Metallprofilelement 1 mit je einem Armende 5 verbunden ist, ist in Fig. 1 beispielhaft nur ein verkürzt dargestelltes Metallprofilelement 1 gezeigt. Die Armenden 5a-5e des Knotens 4 sind in einer gemeinsamen Ebene angeordnet, die durch die Ebene des Armendes 5f gekreuzt wird. Die durch die Armenden 5a-5c und 5e und 5f verlaufenden Längsachsen 6 schneiden sich in einem gemeinsamen Kreuzungspunkt 8. Das Armende 5d ist beispielhaft in spitzem Winkel im Übergang 15 zwischen den Armenden 5c und 5e angeordnet. Das Armende 5c könnte aber auch in jedem anderen Übergang 15 angebracht sein. Am Beispiel des Armendes 5a ist zu erkennen, dass das Profil des Armendes 5 dem Profil des mit ihm zu verbindenden Metallprofilelements 1 entspricht. Am Armende 5b ist dargestellt, dass das Metallprofilelement 1 mit seinem Ende 13 über das Armende 5 geschoben ist. In Fig. 1 ist erkennbar, dass zwischen den Armenden 5a-5f kreisbogenförmige Übergänge 15 angeordnet sind.

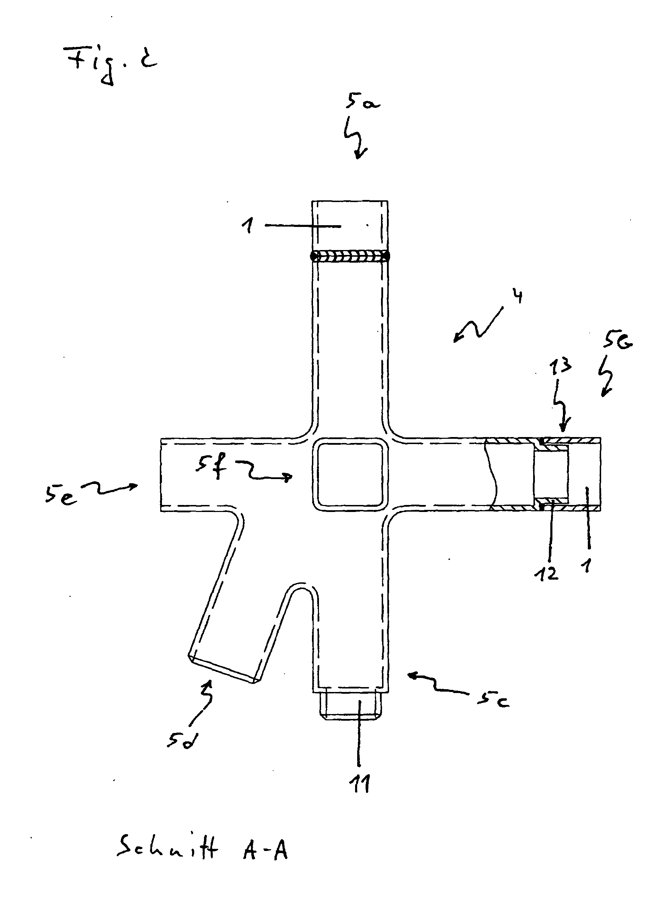

Fig. 2 zeigt einen Schnitt durch den Knoten 4 entlang der Schnittlinie A-A aus Fig. 1. Zu erkennen sind die Armenden 5a-5f des Knotens 4. Im Fall des Armendes 5a ist das Armende 5 bündig mit dem Metallprofilelement 1 verschweißt. Das Ende 13 des Metallprofilelements 1 ist in Fig. 2 über das Ende 12 des Armendes 5 geschoben. Das Armende 5c weist eine Steckverbindung 11 auf, die zur Verbindung mit dem Metallprofilelement 1 vorgesehen ist.

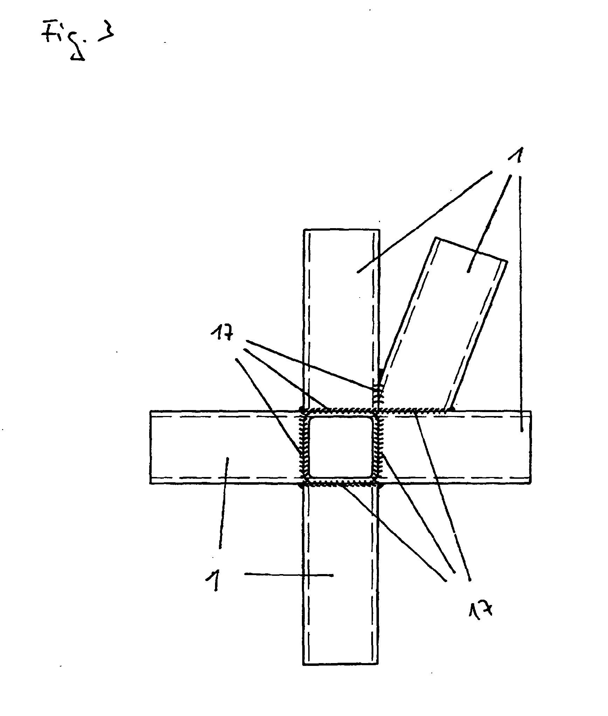

Fig. 3 zeigt die Verschweißung von Metallprofilelementen 1, die entsprechend dem Stand der Technik mittels aneinander angrenzender Schweißnähte 17 miteinander verbunden sind.

### Bezugszeichen:

- 1: Metallprofilelement
- 2:
- 3: Verbindungsstelle
- 4: Knoten
- 5: Armende
- 5a-5f: Armende
- 6: Längsachse des Armendes
- 7: Längsachse des Metallprofilelements
- 8: Kreuzungspunkt
- 9: Profil des Armendes
- 10: Profil des Metallprofilelements
- 11: Steckverbindung
- 12: Ende des Armendes
- 13: Ende des Metallprofilelements
- 14:
- 15: Übergang
- 16:
- 17: Schweißnaht

## Patentansprüche

1. Gerippekonstruktion eines Nutzfahrzeugs, **gekennzeichnet durch** die Verwendung gegossener oder geschmiedeter mehrarmiger Knoten (4), an deren äußerten Armenden (5) Metallprofilelemente (1) befestigbar sind, **dadurch gekennzeichnet, dass** zwischen dem Armende (5) und dem Metallprofilelement (1) eine Steckverbindung angeordnet ist, die sowohl in das Armende (5) als auch in das Metallprofilelement (1) eingreift und aus einem Steckzapfen besteht.

2. Gerippekonstruktion nach Anspruch 1, **dadurch gekennzeichnet, dass** die Armenden (5) eines Knotens (4) in einer gemeinsamen Ebene angeordnet sind.

3. Gerippekonstruktion nach Anspruch 1, **dadurch gekennzeichnet, dass** die Armenden (5) eines Knotens (4) in mehreren sich kreuzenden Ebenen angeordnet sind.

4. Gerippekonstruktion nach einem oder mehreren der vorhergehenden Ansprüche, **dadurch gekennzeichnet, dass** die Armenden (5) einen gemeinsamen zentralen Kreuzungspunkt (8) aufweisen.

5. Gerippekonstruktion nach einem oder mehreren der vorhergehenden Ansprüche, **dadurch gekennzeichnet, dass** das Profil (9) eines Armendes (5) dem Profil (10) des mit ihm zu verbindenden Metallprofilelements (1) entspricht.

6. Gerippekonstruktion nach Anspruch 1, **dadurch gekennzeichnet, dass** das Ende (13) des an dem Armende (5) anzuschweißenden Metallprofilelements (1) in das Armende (5) eingeschoben ist.

7. Gerippekonstruktion nach Anspruch 1, **dadurch gekennzeichnet, dass** das Ende (13) des an dem Armende (5) anzuschweißenden Metallprofilelements (1) über das Ende (12) des Armendes (5) geschoben ist.

8. Gerippekonstruktion nach Anspruch 1, **dadurch gekennzeichnet, dass** zwischen zwei benachbarten Armenden (5) ein kreisbogenförmiger Übergang (15) angeordnet ist.

## Claims

1. Frame construction for a commercial vehicle, **characterized by** the use of cast or forged, multi-armed junctions (4), to the outer arm ends (5) of which metal profile elements (1) can be fastened, **characterized in that** a plug-in connection is arranged between the arm end (5) and the metal profile element (1), the plug-in connection engaging both in the arm end (5) and in the metal profile element (1) and consisting of a plug-in pin.

2. Frame construction according to Claim 1, **characterized in that** the arm ends (5) of a junction (4) are arranged in a common plane.

3. Frame construction according to Claim 1, **characterized in that** the arm ends (5) of a junction (4) are arranged in a plurality of intersecting planes.

4. Frame construction according to one or more of the preceding claims, **characterized in that** the arm ends (5) have a common central intersecting point (8).

5. Frame construction according to one or more of the preceding claims, **characterized in that** the profile (9) of an arm end (5) corresponds to the profile (10) of the metal profile element (1) to be connected thereto.

6. Frame construction according to Claim 1, **characterized in that** the end (13) of the metal profile element (1) to be welded to the arm end (5) is pushed into the arm end (5).

7. Frame construction according to Claim 1, **characterized in that** the end (13) of the metal profile element (1) to be welded to the arm end (5) is pushed over the end (12) of the arm end (5).

8. Frame construction according to Claim 1, **characterized in that** a transition (15) in the shape of an arc of a circle is arranged between two adjacent arm ends (5).

## Revendications

1. Construction squelettique pour un véhicule utilitaire, **caractérisée par** l'utilisation de noeuds (4) à plusieurs bras, moulés ou forgés, aux extrémités de bras (5) extérieures desquels noeuds peuvent être fixés des éléments profilés métalliques (1), **caractérisée en ce qu'**entre l'extrémité de bras (5) et l'élément profilé métallique (1) est disposée une connexion par enfichage, qui vient en prise à la fois dans l'extrémité de bras (5) et dans l'élément profilé métallique (1) et qui se compose d'un tourillon d'enfichage.

2. Construction squelettique selon la revendication 1, **caractérisée en ce que** les extrémités de bras (5) d'un noeud (4) sont disposées dans un plan commun.

3. Construction squelettique selon la revendication 1, **caractérisée en ce que** les extrémités de bras (5) d'un noeud (4) sont disposées dans plusieurs plans s'intersectant.

4. Construction squelettique selon l'une quelconque ou plusieurs des revendications précédentes, **caractérisée en ce que** les extrémités de bras (5) présentent un point d'intersection central commun (8).

5. Construction squelettique selon l'une quelconque ou plusieurs des revendications précédentes, **caractérisée en ce que** le profilé (9) d'une extrémité de bras (5) correspond au profilé (10) de l'élément profilé métallique (1) qui doit lui être connecté.

6. Construction squelettique selon la revendication 1, **caractérisée en ce que** l'extrémité (13) de l'élément profilé métallique (1) à souder à l'extrémité de bras (5) est enfoncée dans l'extrémité de bras (5).

7. Construction squelettique selon la revendication 1, **caractérisée en ce que** l'extrémité (13) de l'élément profilé métallique (1) à souder à l'extrémité de bras (5) est poussée par-dessus l'extrémité (12) de l'extrémité de bras (5).

8. Construction squelettique selon la revendication 1, **caractérisée en ce qu'**entre deux extrémités de bras adjacentes (5) est disposée une transition (15) en forme d'arc de cercle.
